# FASCICULE DE BREVET EUROPEEN

(11) **EP 0 430 746 B1**
(45) Date de publication et mention de la délivrance du brevet: **10.08.1994**
(21) Numéro de dépôt: 90403211.7
(22) Date de dépôt: 13.11.1990
(51) Int. Cl.: B60G 7/02, B60G 17/01

(54) **Dispositif de fixation notamment d'un essieu de train arrière de véhicule automobile sur la caisse du véhicule**
Abstützvorrichtung, insbesondere für die Achse einer Hinterradaufhängung an der Karosserie eines Kraftfahrzeuges
Attachment device, especially for attaching an axle of a rear wheel suspension of a motor vehicle to the body

(30) Priorité: 24.11.1989 FR 8915506
(43) Date de publication de la demande: 05.06.1991
(73) Titulaire: AUTOMOBILES PEUGEOT, 75116 Paris (FR); AUTOMOBILES CITROEN, 92200 Neuilly-sur-Seine (FR)
(72) Inventeur: Galtier, Lucien, F-91390 Morsang Sur Orge (FR); Barthelemy, André, F-78470 Saint Rémy Les Chevreuse (FR)
(74) Mandataire: Berger, Helmut

(56) Documents cités:
- DE-A- 3 131 036
- DE-A- 3 523 912
- DE-A- 3 629 881
- GB-A- 2 163 104
- US-A- 4 687 223

## Description

L'invention concerne un dispositif de fixation d'un essieu de train arrière d'un véhicule sur la caisse de celui-ci, du type décrit dans le préambule de la revendication 1.

Il est connu que, pour assurer un bon guidage des roues arrières du véhicule automobile et pour maintenir une bonne géométrie de suspension du véhicule en régime dynamique, les traverses formant l'ensemble d'un train arrière d'essieu sont liées soit rigidement à la caisse, soit de façon élastique. Pour le premier cas, le confort au niveau sonore et au niveau des vibrations est mauvais tandis que dans le deuxième cas, c'est le guidage du train arrière, c'est-à-dire des roues, qui est perturbé et la sécurité passive du véhicule s'en trouve diminuée.

La présente invention a pour objectif de proposer un dispositif de fixation du type décrit plus haut, qui ne présente pas les inconvénients qui viennent d'être énoncés.

Pour atteindre ce but, le dispositif de fixation selon l'invention comporte les caractéristiques qui sont énoncées dans la partie caractérisante de la revendication principale.

On connait déjà par le document DE-A-3523912 un dispositif de liaison élastique entre un élément lié à une roue de véhicule et la caisse de celui-ci. Or, ce dispositif ne s'applique pas à un essieu de train arrière de véhicule automobile, mais à une roue avant, cette dernière étant liée à la caisse par une sorte de triangle de suspension comprenant une barre disposée sensiblement transversalement et une barre sensiblement longitudinale. Cette dernière barre a pour fonction d'absorber les efforts longitidinaux subis par la roue, dus notamment aux irrégularités de la route. Le dispositif comprend bien un corps en élastomère mais fait varier l'élasticité de la liaison seulement dans la direction de la barre en comprimant axialement le corps en élastomère.

Par conséquent le document antérieur, qui de plus concerne une articulation et non pas une fixation, est très loin de l'objet de l'invention. En effet, un système de fixation d'un essieu de train arrière pose le problème spécifique qui est indiqué plus haut. Il s'est avéré selon l'invention que ce problème peut-être résolu en faisant varier la rigidité de la liaison élastique non seulement dans la direction axiale mais également dans la direction transversale, comme cela est indiqué dans la revendication 1. Or, le document DE-A-3523912 n'indique ni ne suggère la solution que l'invention apporte au problème posé.

D'autres caractéristiques avantageuses de l'invention ressortent des revendications dépendantes.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention, et dans lesquels :
La figure 1 est une vue de dessus schématique d'un train arrière de véhicule automobile, équipé d'un dispositif de fixation selon l'invention, auquel est associé un premier mode de réalisation du système de commande de la variation de l'élasticité des dispositifs de fixation ;
La figure 2 est une vue en coupe axiale d'un premier mode de réalisation d'un dispositif de fixation selon l'invention ;
La figure 3 est une vue en coupe axiale d'un deuxième mode de réalisation d'un dispositif de fixation selon l'invention ;
La figure 4 est une vue de dessus d'un troisième mode de réalisation d'un dispositif de fixation selon l'invention ;
La figure 5 est une vue en coupe selon la ligne V-V de la figure 4 ;
La figure 6 est une vue similaire à celle de la figure 5, mais montre le dispositif selon l'invention à l'état détendu du bloc élastique ;
La figure 7 est une vue en coupe axiale d'un quatrième mode de réalisation d'un dispositif de fixation selon l'invention ;
La figure 8 est une vue en coupe selon la ligne VIII-VIII de la figure 7 ; et
La figure 9 est une vue en coupe axiale d'un cinquième mode de réalisation d'un dispositif de fixation selon l'invention.

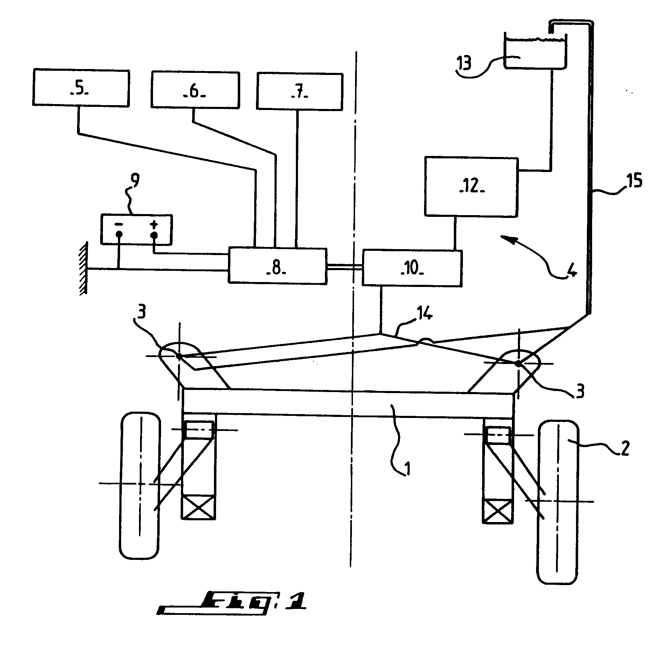

Sur la figure 1 qui illustre, à titre d'exemple, l'application d'un dispositif de fixation selon l'invention à la fixation d'un essieu de train arrière d'un véhicule automobile sur la caisse de l'automobile, les chiffres de référence 1, 2 et 3 désignent respectivement une traverse d'essieu de train arrière du véhicule, les roues arrière et deux dispositifs de fixation de la traverse 1 à la caisse (non représentée) du véhicule, chaque dispositif étant disposé au niveau d'une extrémité de la traverse. Cette dernière présente une structure connue en soi.

L'élasticité des deux dispositifs de fixation est variable sous la commande d'un système schématiquement représenté en 4, en fonction d'au moins un paramètre représentatif de l'état dynamique du véhicule tel que la vitesse du véhicule, l'angle du volant ou l'accélération latérale, les valeurs des différents paramètres étant saisies par des capteurs appropriés indiqués respectivement en 5, 6 et 7. Ces capteurs sont reliés à un calculateur 8 alimenté en énergie électrique à partir d'une source 9 telle que la batterie du véhicule. Le calculateur 8 agit sur l'organe de commande 10 de l'élasticité des dispositifs de fixation 3. Dans le mode de réalisation du système 4 qui est représenté à la figure 1, cet organe de commande est un régulateur de pression d'un système hydraulique dont la source de pression et le réservoir de fluide hydraulique tel que de l'huile portent les chiffres de référence respectivement 12 et 13 et sont reliés aux dispositifs de fixation 3 par des conduits respectivement 14 et 15. Bien entendu d'autres modes de réalisation du système 4 peuvent être envisagés, par exemple à commande électrique, en fonction de la nature du dispositif de fixation dont un certain nombre de modes de réalisation sera décrit ci-après.

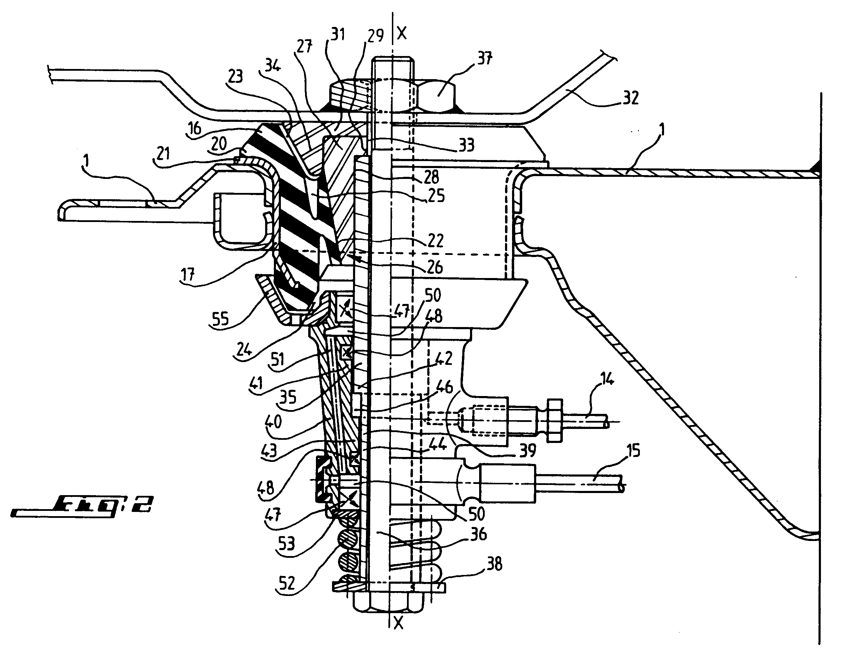

La figure 2 montre un premier mode de réalisation d'un dispositif de fixation 3 selon l'invention. Ce dispositif comprend un bloc élastique 16, en un matériau élastomère, de rigidité axiale et radiale très faible et de section transversale circulaire, qui est emmanché axialement dans un passage de forme appropriée, pratiqué dans la traverse d'essieu 1, avec interposition d'un élément 17 en forme de manchon qui est ancré dans le bloc 16 à la partie inférieure de celui-ci. En haut, le bloc 16 et le manchon 17 présentent des épaulements d'appui respectivement 20 et 21 sur la traverse 1. Le bloc 16 comporte un perçage central 22 de forme tronconique se rétrécissant en direction de son extrémité inférieure. Au niveau des deux extrémités, le perçage est radialement élargi et forme des espaces annulaires respectivement 23 et 24 dont les surfaces internes présentent une configuration sensiblement tronconique se rétrécissant vers le centre du bloc 16. A partir de ces surfaces s'étendent axialement vers l'intérieur du bloc 16 des échancrures 25.

Le bloc 16 comprend en son centre une entretoise 26 qui s'engage axialement dans le perçage central 22 et présente à cette fin une surface externe tronconique de forme complémentaire à ce perçage. La partie supérieure 27 de l'entretoise 26, qui fait saillie hors du perçage 22 du bloc 16, présente une surface externe cylindrique. L'entretoise 26 est de forme tubulaire et comporte un alésage central 28 qui se rétrécit au niveau de l'extrémité 27 en formant un épaulement annulaire 29 s'étendant radialement vers l'intérieur. Sur la partie supérieure cylindrique 27 de l'entretoise 26 est placé un socle 31 qui prend appui sur la caisse du véhicule, indiquée en 32. Ce socle comporte un alésage central 33 coaxial à l'alésage 28 de l'entretoise et porte sur sa surface frontale interne un bourrelet périphérique annulaire 34 qui fait axialement saillie et s'engage dans l'espace interne 23 du bloc 16 en coiffant la partie supérieure 27 de l'entretoise, comme cela ressort de la figure. La partie supérieure d'un élément tubulaire 35 est emmanchée axialement dans l'alésage 28 de l'entretoise 27. Une vis 36 s'étend axialement à travers l'élément tubulaire 35, l'alésage 33 du socle d'appui 31 et à travers la caisse 32. L'extrémité supérieure de la vis ayant traversé la caisse 32 est vissée dans un écrou 37 solidarisé, par exemple par soudage, avec la caisse 32. Une rondelle entretoise 38 est placée sur la vis 36 au niveau de la tête de celle-ci.

L'élément tubulaire 35 constitue le piston d'un dispositif de vérin hydraulique. Sur la partie inférieure dégagée 39 de cet élément piston 35 est monté axialement coulissant un bloc cylindre 40. Ce dernier et l'élément piston 35 comportent chacun deux parties cylindriques de diamètres différents formant à l'endroit du changement de diamètre un épaulement radial. Ainsi, la portion supérieure 41 de plus grand diamètre du bloc cylindre 40 coulisse sur la zone 42 de plus grand diamètre du piston 35 tandis que les zones de plus faible diamètre respectivement 43 et 44 du bloc 40 et du piston 35 sont également en contact de coulissement. Le bloc cylindre 40 et l'élément piston 35 définissent ainsi une chambre 46 de volume variable en fonction de leur position relative axiale.

Au niveau de chaque extrémité, le bloc cylindre 40 est pourvu d'un joint 47 ainsi que d'un joint d'étanchéité 48. La chambre 46 est reliée à un système d'alimentation en fluide hydraulique, par exemple à la conduite 14 selon la figure 1, du régulateur de pression de fluide 10. Le cylindre 40 comporte à ses extrémités, entre les deux joints 47, 48, une petite chambre 50 permettant de recueillir l'huile de fuite. Les deux chambres de fuite sont reliées l'une à l'autre par un canal 51 et à une conduite de retour de fuite telle que la conduite 15 de la figure 1.

On constate encore qu'un ressort hélicoïdal 52 est axialement interposé entre la rondelle entretoise 38 et la face frontale en regard, pourvue d'une rondelle d'appui 53, du bloc cylindre 40. A son extrémité opposée, ce dernier porte une coupelle 55 dont la forme correspond à celle de l'extrémité inférieure du bloc élastique 16 et qui est destinée à recevoir cette extrémité.

Concernant le fonctionnement du dispositif de fixation qui vient d'être décrit, lorsque la pression dans la chambre 46 est nulle, ce qui correspond à la phase de grande vitesse ou mise en sécurité du véhicule, le ressort de compression 52 repoussera le bloc cylindre 40 vers le haut en réduisant le volume de la chambre 46, ce qui entraîne la compression du bloc élastique 16 par l'intermédiaire de la coupelle 55. De ce fait, le bloc 16 et la traverse 1 se trouvent maintenus et centrés sur l'axe X-X dans chacun des deux dispositifs de liaison 3 (figure 1) et déterminent ainsi, par la rigidité en plan horizontal obtenue, un très bon guidage de l'ensemble du train arrière. Lorsque l'on envoie du fluide hydraulique, c'est-à-dire de l'huile, dans la chambre 46, la pression qui s'y établit exerce une poussée axiale sur le bloc 40, comprimant le ressort 52 et supprimant ainsi la contrainte exercée précédemment sur le bloc élastique 16 par l'intermédiaire de la coupelle 55.

Les liaisons élastiques ainsi libérées de leur contrainte, de par leur faible rigidité en plan horizontal, permettent un bon filtrage des vibrations et le confort s'en trouve amélioré.

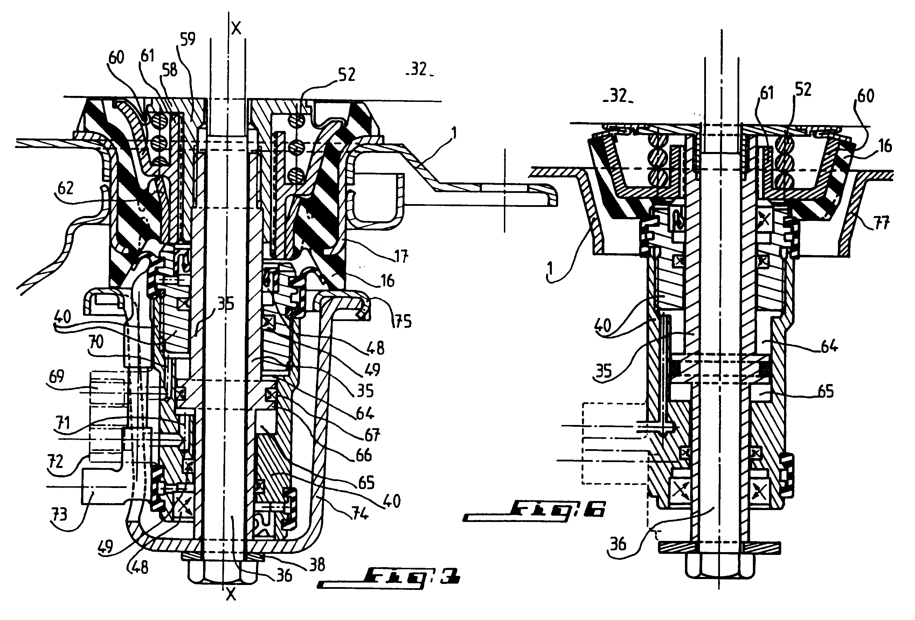

La figure 3 montre un autre mode de réalisation d'un dispositif de fixation 3 selon la présente invention. Sur la figure 3, les pièces correspondant à celles représentées à la figure 2 portent les mêmes références que ces dernières.

Dans ce mode de réalisation, le ressort 52 est disposé du côté de la caisse 32 et prend appui par une extrémité sur la surface frontale de la collerette 58 d'un manchon 59 solidaire de la caisse et par son autre extrémité sur une partie en forme de coupelle 60 s'étendant à partir de la surface externe d'un manchon 61 monté coaxialement coulissant sur le manchon 59. La surface externe de la coupelle 60 a un profil qui correspond à celui du bloc élastique 16. On constate encore que la partie interne du bloc 16 est recouverte d'une douille 62 qui est solidaire du bloc.

Une autre différence par rapport au mode de réalisation selon la figure 2 réside dans le fait que le dispositif selon la figure 3 est un dispositif à commande différentielle. A cette fin, l'élément piston 35 et le bloc cylindre 40 forment deux chambres 64, 65 disposées de part et d'autre d'une collerette 66 du piston 35 dont la surface cylindrique périphérique en contact avec le cylindre 40 est pourvue d'un joint d'étanchéité 67. Les surfaces annulaires frontales de la collerette 66 présentent des surfaces différentes du fait que le diamètre extérieur du piston 35 est plus grand dans sa partie formant la chambre 64 que dans sa portion formant la chambre 65. La chambre 64 à surface frontale de piston plus faible est reliée à une conduite de fluide à haute pression, dont le raccord externe est indiqué en 69, par l'intermédiaire d'un canal interne 70. La chambre 65 est reliée par un canal interne 71 au raccord d'une conduite à pression régulée 72. Le troisième raccord 73 est celui du canal de retour des fuites.

Pour compléter la description, on constate encore la présence d'un élément d'entretoise 74 qui prend appui à une extrémité sur la rondelle entretoise 38 de la vis 36 et par son autre extrémité sur un élément fixe 75 sur lequel s'appuie également l'extrémité inférieure du bloc élastique 16.

Le fonctionnement du dispositif selon la figure 3 ressort immédiatement de celle-ci dans la mesure où la moitié gauche de la figure représente le ressort 52 à l'état comprimé tandis que la moitié droite montre ce même ressort à l'état détendu. La compression du ressort est provoquée par le déplacement du bloc cylindre 40 vers le haut sous l'effet d'une pression dans la chambre 65 régulée en conséquence par rapport à la pression constante dans la chambre 64. En diminuant la pression régulée dans la chambre 65, on provoque le déplacement du bloc cylindre 40 vers le bas et la détente du ressort 52. Dans ce dernier cas, sous l'effet du ressort, la coupelle 60 exerce une contrainte sur le bloc élastique 16. Par contre, lorsque le ressort est comprimé, aucune contrainte ne s'exerce sur ce bloc, comme le montre le côté gauche de la figure 3.

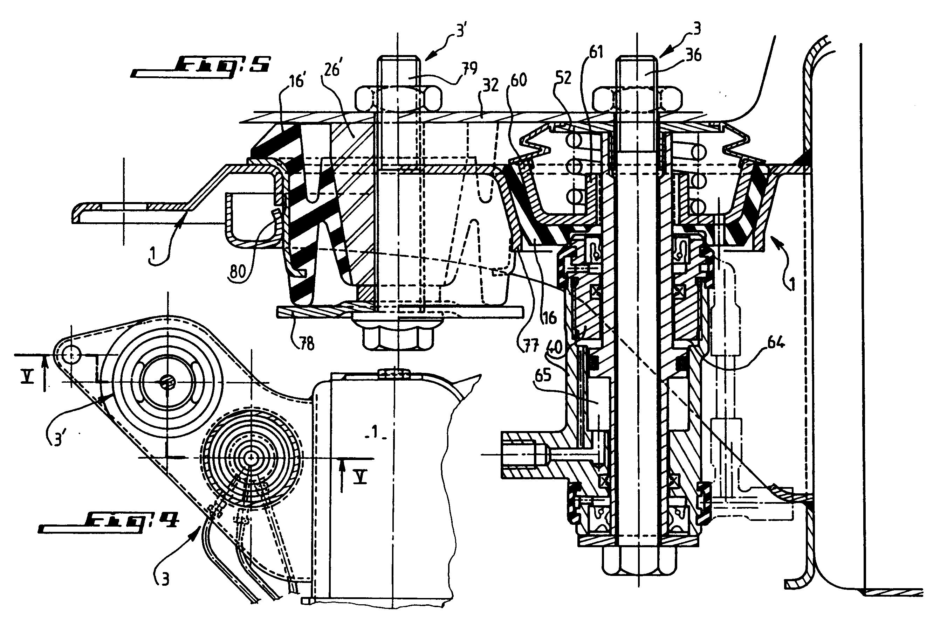

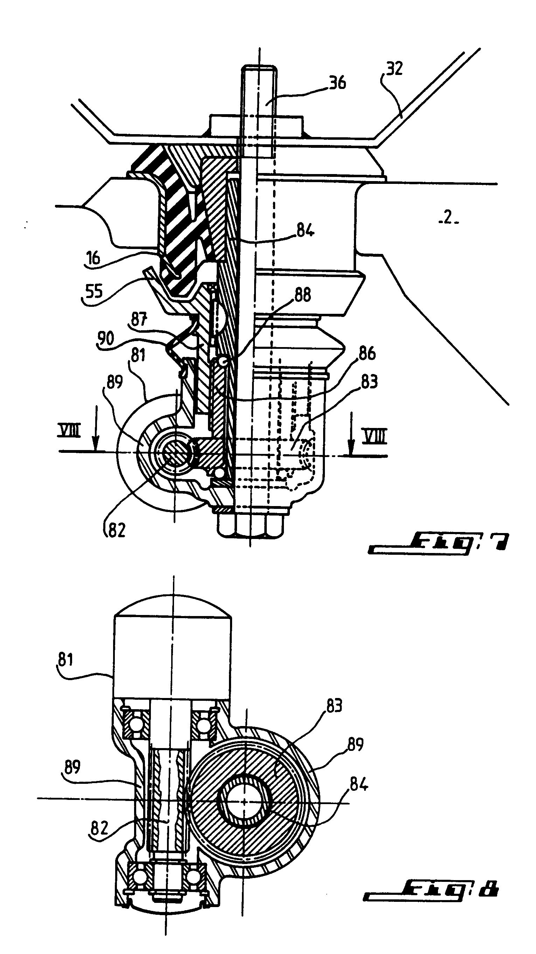

En se reportant aux figures 4 à 6, on décrira un troisième mode de réalisation d'un dispositif 3 selon l'invention, qui coopère avec un dispositif de fixation classique de l'essieu, indiqué en 3′ aux figures 4 et 5. Dans les modes de réalisation selon les figures 2 et 3, le même dispositif sert à la fois à fixer l'essieu et à faire varier la rigidité de la liaison.

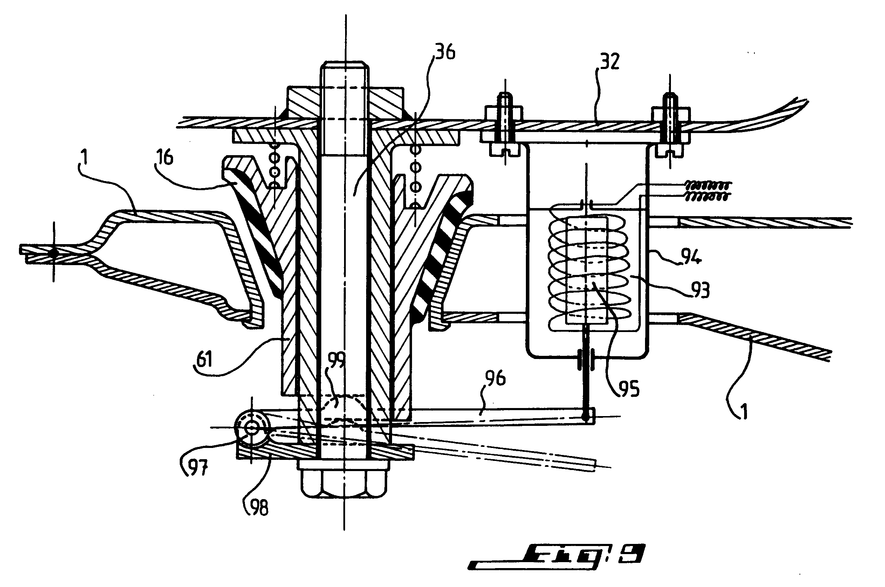

Comme le montre la figure 4, les dispositifs de fixation 3 et 3′ sont juxtaposés sur le bras de liaison de la traverse 1. La structure du dispositif 3 de ce mode de réalisation de l'invention correspond à celle représentée à la figure 3, avec la différence cependant que le bloc élastique 16, avantageusement en caoutchouc, est solidaire de la coupelle 60. Le bloc élastique 16 présente une surface extérieure sensiblement tronconique et est appliqué contre un siège conique concentrique 77 de la traverse 1, de forme complémentaire, ou dégagé de celui-ci, selon que le ressort 52 est détendu comme à la figure 5 ou comprimé comme à la figure 6, sous l'effet de la pression régulée appropriée dans la chambre 65. Le dispositif classique 3′ comporte un ensemble formé par un bloc élastique 16′, avantageusement en catouchouc, et un élément entretoise 26′ , correspondant à l'ensemble bloc élastique et entretoise 16 et 26 de la figure 2. Mais, au contraire de la figure 2, le bloc élastique 16′ est maintenant axialement interposé entre, d'une part, la caisse 32 et, d'autre part, une rondelle d'appui 78 maintenue par la tête d'une vis 79 qui traverse coaxialement l'ensemble 16′, 26′ et la caisse 32 en étant fixée à cette dernière par un écrou. Ce bloc 16′ est emmanché dans un passage 80 cylindrique coaxial de la traverse 1 et prend appui constamment sur celle-ci par sa partie formant tête.

Dans le mode de réalisation selon les figures 4 à 6, la rigidité de liaison obtenue lorsque le ressort 52 est détendu selon la figure 5, annule en quelque sorte la "souplesse" de la fixation classique 3′.

Les figures 7 et 8 montrent un mode de réalisation d'un dispositif de fixation 3 selon l'invention, qui correspond à celui représenté à la figure 2 mais dans lequel la coupelle 55 qui agit sur le bloc élastique 16 n'est pas déplacée axialement par un système à vérin hydraulique mais par un dispositif d'entraînement comprenant un moteur électrique 81 dont l'arbre rotatif 82 conformé en vis tangente entraîne en rotation une roue 83 montée rotative et coaxiale sur un élément tubulaire fixe 84 qui est traversé axialement par la vis 36. Cette roue 83 comporte un moyeu tubulaire coaxial fileté 86 qui engrène avec le filetage d'une partie 87 formant moyeu fileté coaxial de la coupelle 55. Etant donné que le moyeu de coupelle est fixe en rotation, la rotation du moyeu de la roue 83 provoque le déplacement axial de la coupelle qui peut ainsi agir sur le bloc élastique 16. Pour compléter la description, en 88 on a représenté schématiquement des roulements à billes permettant la rotation de la roue 83 avec son moyeu 86 sur l'élément tubulaire 84. Les références 89 et 90 désignent respectivement le carter et un élément de recouvrement souple, destinés à enfermer les moyens de commande de la coupelle 55. Dans ce mode de réalisation, le calculateur 8 de la figure 1 commande le moteur électrique 81.

Dans un autre mode de réalisation d'un dispositif de fixation, les moyens de variation de la rigidité du bloc élastique 16 pourraient être formés par un électro-aimant commandé par le calculateur 8 et dont l'armature mobile serait solidaire de la coupelle 55 de la figure 7.

La figure 9 illustre un mode de réalisation qui utilise un bloc élastique 16 correspondant à celui du mode de réalisation selon les figures 4 à 7 où le bloc est solidaire d'un organe monté axialement mobile sur la vis 36 solidaire de la caisse 32 et destiné à être dégagé d'un siège conique de la traverse 1 ou être en application sur celui-ci, en fonction de la position axiale de l'élément de support du bloc élastique. Selon la figure 9, le déplacement axial de l'organe de support portant la référence 61 est commandé par un électro-aimant 93 enfermé dans un boîtier 94 fixé sous la caisse 32 et dont le noyau 95 est relié à un levier 96 qui s'étend sensiblement perpendiculairement au noyau. L'autre extrémité du levier est articulée en 97 à un support 98 associé à la tête de la vis 36 solidaire de la caisse. Ce levier 96 comporte une bosse de commande 99 et est disposé de façon que cette bosse puisse entraîner l'organe de support 61 en un mouvement axial à l'encontre du ressort 52, comme cela ressort clairement de la figure 9.

Le dispositif à commande électromagnétique qui vient d'être décrit en se référant à la figure 9 peut aussi s'adapter à des liaisons du type "intégré" représentées aux figures 2 et 3.

Tout en conservant le principe de rigidifier et de libérer les liaisons élastiques du cadre formant traverse d'essieu arrière avec la caisse, le système actif de blocage ou de libération peut être réalisé avec tout moyen approprié, électrique, hydraulique ou électromagnétique, qui soit adapté pour provoquer un déplacement axial de l'élément élastique sur la vis qui est solidaire de la caisse.

Les dispositifs de fixation peuvent être adaptés pour fonctionner de façon automatique, selon le schéma donné à la figure 1, sans participation du conducteur, ou avec intervention du conducteur avec un choix entre, par exemple, un mode confort, un mode automatique ou un mode sport, avec verrouillage, quelle que soit la vitesse du véhicule.

Les moyens pour faire varier l'élasticité de la liaison entre la caisse et la traverse d'essieu peuvent être adaptés pour agir selon un mode "tout ou rien" ou de façon progressive.

L'invention permet sans compromis de concilier la vitesse et le confort en conservant dans tous les cas un maximum de sécurité.

L'invention propose ainsi des fixations actives du train arrière pour véhicules automobiles, dont deux points de liaison de ce train arrière avec la caisse sont conçus de façon à assurer un filtrage maximum des vibrations et bruits transmis par les roues. Les fixations sont pilotées en fonction de certains paramètres du véhicule, tels que la vitesse, l'angle du volant et l'acélération latérale. L'invention assure un maximum de confort à faible vitesse du véhicule en laissant une valeur de liberté prédéterminée aux liaisons élastiques caisse-essieu. Avec l'augmentation de la vitesse, cette valeur de liberté diminue et devient presque nulle aux très hautes vitesses, où un très bon guidage du train arrière, c'est-à-dire des roues, est demandé pour assurer la meilleure sécurité de comportement du véhicule.

## Revendications

1. Dispositif de fixation d'un essieu de train arrière (1) de véhicule sur la caisse (32) de celui-ci, du type comprenant un dispositif de liaison élastique qui comporte un corps élastique (16) en un matériau élastomère coopérant avec des surfaces de support faisant partie de l'essieu (1) et de la caisse (32) et formant siège, caractérisé en ce qu'au moins une partie de la surface périphérique du bloc élastique (16) est conique et le siège (17, 27; 17, 60, 61, 62) présente une configuration coaxiale conique complémentaire, que le bloc et le siège sont axialement mobiles l'un par rapport à l'autre et en ce que des moyens de commande de ce déplacement axial relatif sont prévus pour assurer une variation de la compression du bloc élastique (16) dans ses directions axiale et transversale en fonction d'au moins un paramètre représentatif de l'état dynamique du véhicule.

2. Dispositif de fixation selon la revendication 1, caractérisé en ce que le paramètre représentatif de l'état dynamique du véhicule est un paramètre tel que la vitesse du véhicule, l'angle du volant et l'accélération latérale.

3. Dispositif de fixation selon l'une des revendications 1 ou 2, caractérisé en ce que les moyens pour comprimer le corps élastique (16) comprennent une structure fixe solidaire de la caisse (32), un organe mobile sur la structure fixe entre une première position dans laquelle le corps élastique est détendu et une deuxième position dans laquelle le corps est comprimé, des moyens de commande du déplacement de l'organe mobile et des moyens de rappel (52) de l'élément mobile dans ladite deuxième position.

4. Dispositif de fixation selon la revendication 3, caractérisé en ce que les moyens de commande du déplacement de l'élément mobile sont des moyens de toute nature appropriée, tels que des moyens hydrauliques, électriques ou électromagnétiques.

5. Dispositif de fixation selon la revendication 4, caractérisé en ce que la structure fixe et l'organe mobile constituent un vérin hydraulique dont le piston est formé par un élément allongé cylindrique (35), solidaire de la caisse (32), et dont l'élément cylindre (40) est mobile sous l'effet de la pression d'un fluide hydraulique établie dans une chambre de travail (46) du vérin, en fonction d'un paramètre de fonctionnement précité et forme l'organe mobile précité.

6. Dispositif de fixation selon la revendication 4, caractérisé en ce que les moyens de commande du déplacement de l'organe mobile précité comprennent un moteur électrique (81) et un élément tubulaire (83,86) entraîné en rotation par le moteur (81) et monté rotatif sur la structure fixe précitée, coaxialement audit corps élastique (16), en ce que l'organe mobile (87) est monté sur la structure fixe coaxialement à l'élément tubulaire (86) et seulement axialement mobile et en ce que l'organe mobile (87) et l'élément tubulaire rotatif (86) présentent des parties filetées en engagement mutuel assurant un déplacement axial de l'organe mobile lors de la rotation de l'élément tubulaire (86).

7. Dispositif de fixation selon la revendication 4, caractérisé en ce que les moyens de commande du déplacement de l'organe mobile comportent un électro-aimant (93) dont l'armature mobile (95) provoque le déplacement de l'organe mobile (61).

8. Dispositif de fixation selon l'une des revendications précédentes, caractérisé en ce que les moyens pour faire varier l'élasticité sont intégrés au dispositif de liaison élastique.

9. Dispositif de fixation selon l'une des revendications 1 à 7, caractérisé en ce qu'il comprend, montés en parallèle et séparés, un dispositif (3') à moyen de liaison élastique invariable et un dispositif (3) à moyen de liaison élastique variable.

10. Dispositif de fixation selon la revendication 9, caractérisé en ce que le corps élastique (16) est de forme conique fixé sur un siège conique axialement mobile sur la structure fixe, et susceptible de venir en application sur un siège conique (77) de forme complémentaire à celle du bloc élastique (16), ce siège (77) faisant partie de la traverse (2).

11. Dispositif de fixation selon l'une des revendications précédentes, caractérisé en ce que les moyens pour faire varier l'élasticité de la liaison sont adaptés pour agir selon un mode tout ou rien.

12. Dispositif de fixation selon l'une des revendications 1 à 10, caractérisé en ce que les moyens pour faire varier l'élasticité de la liaison sont adaptés pour agir de manière progressive.

## Patentansprüche

1. Vorrichtung zur Befestigung einer Hinterradsatzachse (1) eines Fahrzeugs an dem Wagenkasten (32) desselben, derjenigen Gattung, die einen mit einen Teil der Achse (1) und des Wagenkastens (32) bildenden und einen Sitz bildenden Tragflächen zusammenwirkenden elastischen Körper (16) aus einem Elastomerwerkstoff aufweist, dadurch gekennzeichnet, dass wenigstens ein Teil der Umfangsfläche des elastischen Blocks (16) kegelförmig ist und der Sitz (17, 27; 17, 60, 61, 62) eine koaxiale kegelförmige komplementäre Gestalt aufweist, dass der Block und der Sitz in bezug aufeinander axial bewegbar sind und dass Mittel zur Steuerung dieser relativen Axialbewegung vorgesehen sind, um eine Veränderung des Zusammendrückens des elastischen Blocks (16) in seinen beiden Axial- und Querrichtungen in Abhängigkeit von wenigstens einem den dynamischen Zustand des Fahrzeugs darstellenden Parameter zu gewährleisten.

2. Befestigungsvorrichtung gemäss Anspruch 1, dadurch gekennzeichnet, dass der den dynamischen Zustand des Fahrzeugs darstellende Parameter ein Parameter, wie die Geschwindigkeit des Fahrzeugs, der Winkel des Lenkrades und die Seitenbeschleunigung ist.

3. Befestigungsvorrichtung nach einem der Ansprüche 1 oder 2, dadurch gekennzeichnet, dass die Mittel, um den elastischen Körper (16) zusammenzudrücken, einen mit dem Wagenkasten (32) fest verbundenen ortsfesten Aufbau, ein an dem ortsfesten Aufbau zwischen einer ersten Stellung, in welcher der elastische Körper entspannt ist und einer zweiten Stellung, in welcher der Körper zusammengedrückt wird, bewegliches Glied, Mittel zur Steuerung der Bewegung des beweglichen Gliedes und Mittel (52) zur Rückstellung des beweglichen Elementes in die besagte zweite Stellung, umfassen.

4. Befestigungsvorrichtung nach Anspruch 3, dadurch gekennzeichnet, dass die Mittel zur Steuerung der Bewegung des beweglichen Elementes Mittel jeder geeigneten Art, wie hydraulische, elektrische oder elektromagnetische Mittel sind.

5. Befestigungsvorrichtung nach Anspruch 4, dadurch gekennzeichnet, dass der ortsfeste Aufbau und das bewegliche Glied einen hydraulischen Kraftzylinder bilden, dessen Kolben durch ein mit dem Wagenkasten (32) fest verbundenes längliches zylindrisches Element gebildet wird und dessen Zylinderelement (40) unter der Wirkung des in einer Arbeitskammer (46) des Kraftzylinders erzeugten Druckes eines hydraulischen Fluids in Abhängigkeit eines vorgenannten Betriebsparameters beweglich ist und das vorgenannte bewegbare Glied bildet.

6. Befestigungsvorrichtung nach Anspruch 4, dadurch gekennzeichnet, dass die Mittel zur Steuerung der Verschiebung des vorgenannten beweglichen Gliedes einen elektrischen Motor (81) und ein durch den Motor (81) antriebsmässig gedrehtes und drehbar an dem vorgenannten ortsfesten Aufbau koaxial mit dem besagten elastischen Körper (16) angeordnetes rohrförmiges Element (83,86) umfassen, dass das bewegliche Glied (87) koaxial mit dem rohrförmigen Element (86) und nur axial bewegbar an dem ortsfesten Aufbau angeordnet ist und dass das bewegliche Glied (87) und das drehbare rohrförmige Element (86) eine Axialverschiebung des beweglichen Gliedes bei der Drehung des rohrförmigen Elementes (86) gewährleistende, miteinander im Eingriff stehende, mit Gewinde versehene Teile aufweisen.

7. Befestigungsvorrichtung nach Anspruch 4, dadurch gekennzeichnet, dass die Mittel zur Steuerung der Bewegung des beweglichen Gliedes einen Elektromagnet (93) umfassen, dessen bewegbare Anker (95) die Verschiebung des beweglichen Gliedes (61) verursacht.

8. Befestigungsvorrichtung nach einem der vorangehenden Ansprüche, dadurch gekennzeichnet, dass die Mittel, um die Elastizität zu verändern, in die elastische Verbindungsvorrichtung eingegliedert sind.

9. Befestigungsvorrichtung nach einem der Ansprüche 1 bis 7, dadurch gekennzeichnet, dass sie eine Vorrichtung (3′) mit einem unveränderlichen elastischen Verbindungsmittel und eine Vorrichtung (3) mit einem veränderlichen elastischen Verbindungsmittel, die parallel geschaltet und getrennt sind, umfasst.

10. Befestigungsvorrichtung nach Anspruch 9, dadurch gekennzeichnet, dass der elastische Körper (16) kegelförmiger Gestalt ist und an einem an dem ortsfesten Aufbau axial beweglichen kegelförmigen Sitz befestigt ist und fähig ist, sich an den kegelförmigen Sitz (77), mit einer Gestalt die zu derjenigen des elastischen Blocks (16) komplementär ist, anzulegen, wobei dieser Sitz (77) einen Teil des Querträgers (1) bildet.

11. Befestigungsvorrichtung nach einem der vorangehenden Ansprüche, dadurch gekennzeichnet, dass die Mittel, um die Elastizität der Verbindung zu verändern, angepasst sind, gemäss einer alles oder nichts entsprechenden Wirkungsweise zu wirken.

12. Befestigungsvorrichtung nach einem der Ansprüche 1 bis 10, dadurch gekennzeichnet, dass die Mittel, um die Elastizität der Verbindung zu verändern, angepasst sind, um in einer fortschreitenden Weise zu wirken.

## Claims

1. Device for the fastening of a rear wheel set axle (1) of a vehicle onto the body (32) thereof, of the type comprising an elastic connection device which comprises an elastic body (16) of an elastomeric material cooperating with support surfaces forming part of the axle (1) and of the car body (32) and forming a seat, characterized in that at least one portion of the peripheral surface of the elastic block (16) is conical and the seat (17, 27 ; 17, 60, 61, 62) exhibits a complementary coaxial tapering configuration, in that the block and the seat are axially movable with respect to each other and in that means for controlling this relative axial displacement are provided to ensure a variation of the compression of the elastic block (16) in its axial and transverse directions as a function of at least one parameter representative of the dynamic state of the vehicle.

2. Fastening device according to claim 1, characterized in that the parameter representing the dynamic state of the vehicle is a parameter such as the speed of the vehicle, the angle of the steering wheel and the lateral acceleration.

3. Fastening device according to one of claims 1 or 2, characterized in that the means to compress the elastic body (16) comprise a stationary structure made fast to the car body (32), a member on the stationary structure movable between a first position in which the elastic body is expanded and a second position in which the body is compressed, means for the control of the displacement of the movable member and means (52) for returning the movable element into the said second position.

4. Fastening device according to claim 3, characterized in that the means for the control of the displacement of the movable element are means of any suitable nature such as hydraulic, electric or electromagnetic means.

5. Fastening device according to claim 4, characterized in that the stationary structure and the movable member constitute a hydraulic jack the piston of which is formed of an elongated cylindrical element (35) made fast to the car body (32) and the cylinder element (40) of which is movable under the effect of the pressure of a hydraulic fluid built up in a working chamber (46) of the jack in accordance with an aforesaid operating parameter and forms the aforesaid movable member.

6. Fastening device according to claim 4, characterized in that the means for the control of the displacement of the aforesaid movable member comprise an electric motor (81) and a tubular element (83, 86) rotated by the motor (81) and rotatably mounted onto the aforesaid stationary structure, coaxially with the said elastic body (16), in that the movable member (87) is mounted onto the stationary structure coaxially with the tubular element (86) and only in axially movable relationship and in that the movable member (87) and the rotary tubular element (86) exhibit threaded portions in mutual engagement ensuring an axial displacement of the movable member upon the rotation of the tubular element (86).

7. Fastening device according to claim 4, characterized in that the means for the control of the displacement of the movable member comprise an electromagnet (93) the movable armature (95) of which causes the displacement of the movable member (61).

8. Fastening device according to one of the foregoing claims, characterized in that the means for varying the elasticity are integrated into the elastic connection device.

9. Fastening device according to one of claims 1 to 7, characterized in that it comprises a device (3') with an invariable elastic connection means and a device (3) with a variable elastic connection means which are mounted in parallel and separated.

10. Fastening device according to claim 9, characterized in that the elastic body (16) is of conical shape fastened onto a conical seat axially movable on the stationary structure and capable of being applied onto the conical seat (77) of a shape complementary of that of the elastic block (16), this seat (77) forming part of the cross member (1).

11. Fastening device according to one of the foregoing claims, characterized in that the means for varying the elasticity of the connection are adapted to act according to an on-off mode.

12. Fastening device according to one of claims 1 to 10, characterized in that the means for varying the elasticity of the connection are adapted to act in a gradual manner.
